# EUROPEAN PATENT SPECIFICATION

(11) **EP 2 011 711 B1**
(45) Date of publication and mention of the grant of the patent: **09.03.2011**
(21) Application number: 07013066.1
(22) Date of filing: 04.07.2007
(51) Int. Cl.: B60W 50/08

(54) **Method and apparatus for conveying information to an occupant of a motor vehicle**
Verfahren und Vorrichtung zur Übermittlung von Informationen an einen Kraftfahrzeuginsassen
Procédé et appareil de transport d'informations vers un occupant d'un véhicule à moteur

(43) Date of publication of application: 07.01.2009
(73) Proprietor: Harman Becker Automotive Systems GmbH, 76307 Karlsbad (DE)
(72) Inventor: Hess, Wolfgang, 76307 Karlsbad (DE); Münch, Tobias, 75334 Straubenhardt (DE); Nitzpon, Hans-Jürgen, 76275 Ettlingen (DE)
(74) Representative: Bertsch, Florian Oliver

(56) References cited:
- EP-A- 1 319 962
- WO-A-98/33676
- US-A- 6 087 961
- US-A1- 2002 196 134
- US-A1- 2003 141 967
- US-A1- 2004 178 893
- US-A1- 2006 001 532

## Description

This invention relates to a method and apparatus for conveying information to an occupant of a motor vehicle. Such a method and such an apparatus may in particular be employed in the context of driver assistance systems.

### Related Art

Motor vehicles like cars, trucks and the like increasingly use driver assistance systems to assist a driver in driving the motor vehicle. In the following description, a vehicle equipped with a driver assistance system will be referred to as an "equipped vehicle".

An example for such a driver assistance system is a parking assistance system which comprises sensors for measuring a distance to obstacles like other vehicles behind the equipped vehicle and which emits warning signals corresponding to the measured distance, wherein for example a frequency of a warning tone increases with decreasing distance.

Another example are navigation systems which, for example by using GPS (Global Positioning System), determine the position of the equipped vehicle and inform the driver of the route to be taken to a desired destination.

Yet other examples of driver assistance systems monitor traffic surrounding the equipped vehicle and inform the driver of dangerous situations, for example an impending collision or a distance to another vehicle below a predetermined safety distance. This informing of the driver may be done acoustically by warning signals and the like, optically using displays or by a combination of the two.

In all these situations, some driving-relevant information, be it a route to be taken, a distance to an obstacle or information regarding an impending collision, is obtained, and based on the obtained driving-relevant information an audio message, a visual message and/or a tactile message is conveyed to the driver.

When conveying such information, it is generally desirable that the significance of the information can be understood by the driver of the equipped vehicle as quickly and intuitively as possible such that the distraction of the driver is minimized and quick reaction times in the case of warnings of dangerous situations become possible. In this respect, it is for example not desirable that after hearing a warning signal the driver additionally has to consult a display to obtain more information before the driver can respond to the dangerous situation.

From US2006/001532 A1, considered as the closest prior art, a method according to the preamble of claim 1 is known. In this document, depending on a content to be alarmed to a driver of a vehicle, a position of a virtual sound source is determined, and a message is output such that is seems to come from the virtual sound source. The localization position of the virtual sound source is determined using a table.

From WO98/33676 a vehicle collision warning system is known, wherein sounds are displayed as warnings which are perceived by the occupant to be directed from a direction of a potential collision. As sounds, for example automobile sound samples, may be used, wherein the sound amplitude may be used to simulate the distance to the item with which a collision is possible. In order to reduce a probability of a front-to-back confusion, in some embodiments described in this document four speakers are provided such that sound pressure may come both from the front and from the rear.

From US2004/0178893 A1 a vehicle warning system is known, wherein audio, visual and/or haptic alarms may be used, haptic alarms including for example a seat vibration.

Further vehicle warning systems are known from US 6,087,961, US2003/0141967 A1 or EP 1319 962 A1.

### Summary

Therefore, a need exists for a method and an apparatus for conveying information to an occupant of a motor vehicle which contributes to improving the reception of said information by said occupant.

This need is met by a method according to claim or an apparatus according to claim 13. The dependent claims define preferred or advantageous embodiments of the present invention.

According to an aspect of the invention, a method for conveying information to an occupant of a motor vehicle is provided, said method comprising the steps of:
- obtaining driving-relevant information,
- determining an audio message depending on said driving-relevant information,
- determining a spatial characteristic for said audio message depending on said driving-relevant information, and
- outputting said audio message with said spatial characteristic in said motor vehicle.

The spatial characteristic corresponds to a position of a stationary relevant element. In this case, the spatial characteristic comprises a movement. By virtually moving the source of the audio message, the risk of a so-called front to back confusion is minimized, and the attention of the occupant may be enhanced.

The audio message informs the occupant of a stationary obstacle (for example an obstacle in front), a slight movement is introduced, i.e. a slight variation of the direction. Such slight movements have turned out to reduce the probability of so-called front to back confusion, i.e. a confusion between an audio message reproduced as coming from the front with an audio message coming from the rear of the occupant.

By outputting the audio message with a spatial characteristic, the reception of the audio message and/or the amount of information conveyed by the audio message can be enhanced and/or improved.

Said spatial characteristic may comprise parameters like distance, direction or movement, wherein said distance, direction and/or movement may be determined relative to said motor vehicle. In other words, the audio message is output in a way to give the occupant the impression of hearing the audio message from a specific distance, from a specific direction and/or with a specific movement according to the determined spatial characteristic. To achieve this, techniques like convolving the audio message with so-called room impulse responses and/or crosstalk cancellation may be used.

In contrast to visual information, an audio message has the advantage that it may be received by an occupant like a driver at any time. In particular it is not required that the occupant looks at a display or the like.

Auditory presentation enables a fast reaction time, since auditory information is intuitively processed by cognition, whereas visual information presentation forces the user to identify and interpret information.

Therefore, in an embodiment information may be conveyed to an occupant of a vehicle without using any visual display. In another embodiment, a visual display may be additionally provided to convey additional visual information, although this is not required.

The driving-relevant information may comprise information regarding traffic like traffic jams on the road, regarding other vehicles, for example approaching emergency vehicles or vehicles with which a collision may occur when no action is taken such as overtaking maneuvers, regarding other kinds of obstacles or the like. The spatial characteristic in the latter cases may comprise a direction and/or distance corresponding to the direction and distance, respectively, of the obstacle, other vehicles and the like.

The audio message may comprise spoken text, signals, music, sounds like sound of a siren and/or sounds of a braking vehicle and the like.

In an embodiment, when the driving-relevant information is classified as an emergency, additional means for alerting an occupant, in particular a driver, like tactile means, e.g. a shaker causing vibrations in a seat of the equipped motor vehicle, may be activated.

According to a second aspect of the invention, an apparatus for conveying information to an occupant of a motor vehicle is provided, comprising:
- obtaining means for obtaining driving-relevant information,
- determining means for determining an audio message depending on said driving-relevant information and for determining a spatial characteristic for said audio message depending on said driving-relevant information, and
- outputting means for outputting said audio message with said spatial characteristic in said motor vehicle.

With such an apparatus, the method according to the first aspect may be executed.

The obtaining means may comprise sensors like optical sensors, infrared sensors, radar sensors, and/or acoustical sensors for determining distances, directions and/or a speed of obstacles or other vehicles around a vehicle equipped with the apparatus according to the second aspect. The obtaining means may also comprise a navigation system for obtaining information regarding the position of the motor vehicle or to obtain traffic information. The obtaining means additionally or alternatively may comprise an interface for connecting to such devices as sensors, navigation systems or the like.

The determining means may comprise a memory in which a plurality of different audio messages are stored. In this case, an audio message may be selected by the determining means from the memory depending on the driving-relevant information.

The outputting means may comprise a convolution engine and/or a crosstalk-canceller to generate audio signals which, when output via loudspeakers or the like, have the desired spatial characteristic. In this respect, the outputting means may comprise an interface to an audio system (radio system, CD system and the like) of the vehicle, may be combined with such an audio system or may comprise its own sound generation means like amplifiers, loudspeakers and the like.

While already with two loudspeakers a spatial characteristic may be realized, preferably four loudspeakers (for example a pair of loudspeakers in the front and a pair of loudspeakers in the rear) or six loudspeakers (with an additional pair of loudspeakers in the middle) are provided or used to obtain spatial characteristics better matching with reality.

### Brief Description of the Drawings

Fig. 1 is a block diagram of an embodiment of an apparatus according to the present invention,
Fig. 2 is a flow diagram showing an embodiment of a method according to the present invention, and
Fig. 3 is an explanatory diagram for explaining further features of embodiments.

### Detailed Description of Preferred Embodiments

In the following, embodiments of the present invention will be described with reference to the attached drawings.

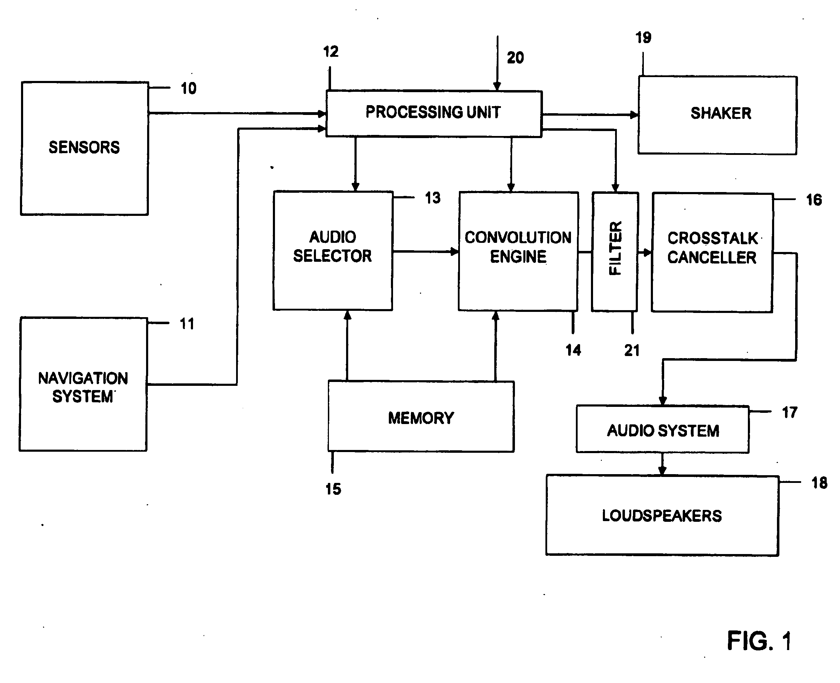

In Fig. 1, an embodiment of an apparatus of the present invention is shown. The apparatus shown in Fig. 1 is adapted to be installed in a motor vehicle like a car, a truck or the like.

The apparatus according to the embodiment of Fig. 1 comprises sensors 10 for detecting other vehicles, obstacles, pedestrians and the like in the surroundings of the motor vehicle equipped with the apparatus of Fig. 1 ("equipped vehicle"). The sensors may for example comprise infrared sensors, radar sensors, optical sensors, and/or acoustical sensors (microphones). Such sensors may for example be mounted in bumpers of the equipped vehicles, along the sides of the equipped vehicle and/or in the interior of the equipped vehicle.

Sensors 10 are coupled with a processing unit 12 for processing signals received from the sensors and deriving driving-relevant information, for example information regarding an impending collision or information regarding the position of obstacles and other vehicles. It should be noted that such sensors and processing units as described so far are also employed in conventional driver assistance systems and therefore need not be described here again in detail. In general, any conventional apparatus or method for obtaining such driving-relevant information may be used.

In addition, in the embodiment of Fig. 1, a navigation system 11 is coupled with processing unit 12. Navigation system 11 may provide information regarding the position of the equipped vehicle, information regarding traffic, for example traffic jams, in particular by using a traffic message channel (TMC) and/or information regarding a route to be taken to processing unit 12. This information is also used for obtaining driving-relevant information, for example information regarding a traffic jam on the route the equipped vehicle is using.

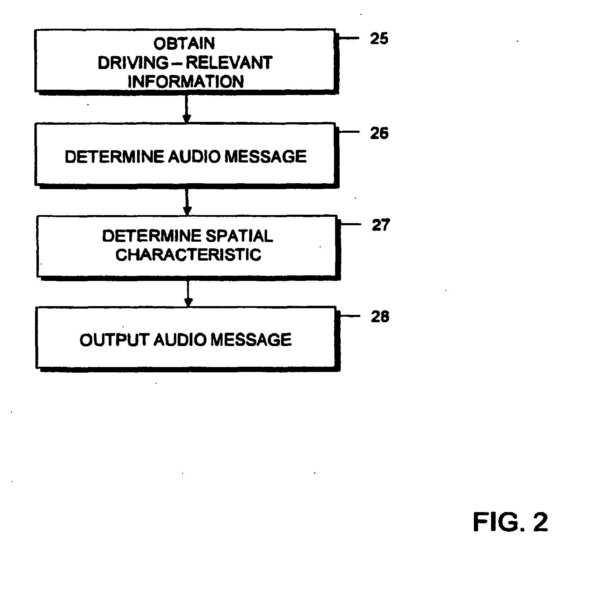

Sensors 10, navigation system 11 and the above-described functions of processing unit 12 are an example of step 25 of an embodiment of a method according to the present invention shown in Fig. 2, in which step driving-relevant information is obtained.

As a next step 26, an audio message is determined depending on the driving-relevant information. In the embodiment of Fig. 1, to this end processing unit 12 controls audio selector 13 to select an appropriate audio message stored in a memory 15.

The kind of audio message in the embodiment shown depends on the driving-relevant information obtained. For example, the audio message may comprise spoken text related to the situation, for example an announcement of a distance of another vehicle, a traffic jam (for example "traffic jam" or "traffic jam 5 km ahead") and the like. The audio message may also comprise simple signals like beeps. Other possible types of audio messages are traffic sounds like braking noises, which for example may be used in dangerous situations, i.e. when a collision with another vehicle is likely to occur. Also music may be used as an audio message, wherein the type of music may be adapted to the traffic-relevant information (music with sub-bass, calming music, exciting music and the like). Also, in case the driving-relevant information is for example the information that an emergency vehicle approaches, the audio message may be the sound of a siren. The audio message may also comprise more than one of the above types of messages, e.g. spoken text combined with music.

In case the sensors comprise microphones or other means for detecting sounds, the audio message, instead of being selected from memory 15, may also be directly derived from the sound signals produced by the microphones.

Referring again to Fig. 2, in step 27 a spatial characteristic is determined depending on the driving-relevant information obtained in step 25. Spatial characteristic in this respect relates to a desired spatial hearing impression an occupant of the equipped vehicle has when he hears the audio message determined in step 26. In the embodiment shown, the spatial characteristic comprises direction characteristics, distance characteristics and/or movement characteristics. In other words, according to the spatial characteristic determined in step 27 an occupant of the equipped vehicle should hear the audio message from a specific direction, from a specific distance and/or with a specific movement as determined by the spatial characteristic.

In step 28, the audio message is then output with the determined spatial characteristic. Examples for this will be given in the following.

As a first example, if the driving-relevant information obtained in step 25 corresponds to the one of a parking assistance system, i.e. comprises information regarding distance and direction of an obstacle behind the equipped vehicle, the spatial characteristic according to an embodiment comprises said distance and direction such that the audio message output with this spatial characteristic makes the impression to an occupant as if coming from said direction and being in said distance. The audio message itself in this case may comprise a simple "beep" signal, but also may comprise a text announcing the distance of the obstacle, for example "one meter left". As the equipped vehicle approaches the obstacle in a parking maneuver, the distance of the spatial characteristic decreases, and also the direction may change so that the audio message heard by the occupant is perceived as moving.

In a second example, the driving-relevant information comprises information regarding an approaching emergency vehicle like a police car, an ambulance or a fire engine. In this case, the spatial characteristic, similar to the one described above for the parking assistance system, may comprise direction, distance and movement of the emergency vehicle. Therefore, a siren sound, either a siren stored in a memory like memory 15 of Fig. 1 or a siren sound extracted from the driving-relevant information as for example captured by microphones may for example be output in step 28 such that the occupant hears the siren from the corresponding direction and in the corresponding distance. Therefore, an at least approximately realistic impression of the approaching emergency vehicle may be conveyed to an occupant of the equipped vehicle even if the acoustic insulation of the vehicle and/or the volume of internal sound system is such that the approaching emergency vehicle could hardly be heard otherwise.

As a third example, the driving-relevant information comprises traffic information regarding traffic jams or accidents, for example supplied by navigation system 11 of Fig. 1. In this case, the audio message in an embodiment comprises a corresponding text, for example "traffic jam 5 km ahead", and the spatial characteristic is chosen such that this audio message is heard in front of an occupant with a distance corresponding to the distance of the traffic jams, i.e. traffic jams further ahead on the road are heard as being announced from a greater distance than traffic jams closer to the actual position of the vehicle.

In a fourth example, the driving-relevant information obtained in step 25 comprises information regarding other vehicles than the equipped vehicle presenting a potential danger, for example an overtaking vehicle in the blind area of the driver. In this case, the spatial characteristic is determined such that the audio message is heard as coming from the direction of this vehicle.

In a fifth example, the audio message itself in this case may be a text, for example "attention - vehicle overtaking", or a sound corresponding to the sound of a vehicle. The audio message may also be chosen depending on the danger of the situation. For example, a normal overtaking maneuver may simply be announced as explained above, while a abrupt braking vehicle in front of the equipped vehicle may be announced with additional warning sounds, the sound of a braking vehicle and the like.

Returning now to Fig. 1, an implementation of steps 27 and 28 according to the embodiment of Fig. 1 will be explained. In the embodiment of Fig. 1, the spatial characteristic is determined by already mentioned processing unit 12. In order to produce signals giving the desired hearing impression to an occupant of the equipped vehicle according to the determined spatial characteristic, the audio message selected by audio selector 13 is fed to a convolution engine 14 performing a low latency block convolution/filtering with so-called room impulse responses (RIR). In the embodiment shown, the room impulse responses are static, non-individualized room impulse responses which are stored in memory 15. Non-individualized in this case refers to the fact that the room impulse responses are not measured for an individual human being who later hears the audio message, for example the driver, but represent RIRs determined beforehand independently of the individual occupant. Static means that room impulse responses are measured for a plurality of points in space, and the spatial characteristic is produced by using the point or points in space which best match the desired spatial characteristic.

Convolution engine 14 performs a convolution of the audio message with a room impulse response read from memory 15 according to the determined spatial characteristic. This convolution is performed for each sound reproducing channel, for examples each loudspeaker used.

The convolution of the audio message with the room impulse response constitutes a filtering of the audio message. With this filtering, e.g. the distance of the spatial characteristic mentioned above may be adjusted by varying loudness, spectral properties, for example by simulating absorption by air, or addition of reflection and reverberation. The direction may be changed by changing delays and signal levels in the sound reproducing channels. These techniques are generally known from stereo or multichannel sound reproducing or binaural technology.

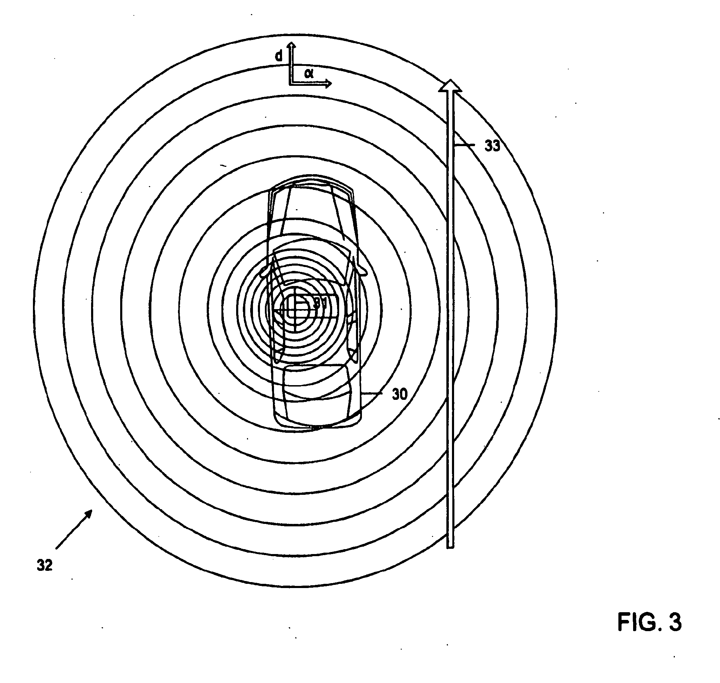

With the technique described above, the spatial resolution of the system is determined by the number of room impulse responses stored in memory 15. Preferably, the resolution is greater for distances near the occupant, for example the driver, of the equipped vehicle than farther away. This will be further illustrated with reference to Fig. 3.

Fig. 3 shows, as an example for the equipped vehicle, a car 30, wherein the position of the driver is marked with a cross 31. Circles 32 around the position of the driver indicate the distances d for which room impulse responses are stored in memory 15 of Fig. 1. As can be seen, the spacing between the circles is smaller closer to the position of the driver than farther away from the driver representing a higher resolution close to the driver.

Room impulse responses are stored for different directions as represented by an azimuth angle α . The directional spacing, i.e. the azimuth angles between two adjacent room impulse responses, may also be smaller for distances closer to the position of the driver than for distances farther away from the driver.

With such room impulse responses, an "audio path" as represented by an arrow 33 may be produced which gives the impression of a moving source of the audio message. In case of arrow 33, room impulse responses corresponding to the points where arrow 33 crosses circle 32 are used, wherein for each crossing point the room impulse response on the same circle, i.e. for the same distance, closest to the crossing point is used in an embodiment. For giving the impression of movement, the room impulse response as used in convolution engine 14 are then switched at appropriate time intervals. This corresponds to a switching of RIR filters. In order to give a better impression of a continuous movement in embodiments a fading of the room impulse responses is used.

In embodiments of the invention, it is also possible to store a sequence of room impulse responses for a number of predetermined movement paths like the one represented by arrow 33 in Fig. 3 and then retrieve the sequence as spatial characteristic.

Returning to Fig. 1, the output of convolution engine 14 is fed to a filter 21 which also is controlled by processing unit 12. With a filter 21, for a path like the one represented by arrow 33 of Fig. 3 a frequency shift is introduced to the signal for simulating the Doppler effect. This enhances the impression of a moving sound source. It should be noted that in other embodiments filter 21 may be integrated in convolution engine 14 or be left out.

Downstream of filter 21, a crosstalk canceller 16 which allows symmetric or unsymmetric crosstalk cancellation is provided. Crosstalk canceller 16 serves for canceling crosstalk. Since in the motor vehicle as will be explained the audio message ultimately is output by a loudspeaker system, in general each ear of an occupant hears the sounds output by each loudspeaker. However, to make sure that each ear only hears the sounds intended for it to produce the desired spatial characteristic and spatial shift of auditory objects can be presented, a crosstalk-canceller is used. Also crosstalk-canceller 16 adds cancellation signals which eliminate or compensate signals not intended for an ear. This technique is also known from the field of 3D and binaural audio rendering techniques.

The signals output by crosstalk-canceller 16 are fed to an audio system 17 which amplifies the sounds and feeds to them to loudspeakers 18. It should be noted that even with a single pair of loudspeakers, some spatial impression may be realized. Preferably, however, two pairs of loudspeakers, one pair in the front of the equipped vehicle and one pair in the rear of the equipped vehicle, or three pairs of loudspeakers with an additional pair in the middle section of the equipped vehicle is used. Other arrangements are also possible in other embodiments.

It should be noted that audio system 17 and loudspeakers 18 may be dedicated components of the embodiment of Fig. 1. It is also possible that audio system 17 and loudspeakers 18 correspond to a sound system which is used for other purposes as well, for example for hearing music, and the apparatus of Fig. 1 provides an interface to this audio system.

As can be seen in Fig. 1, the apparatus according to this embodiment additionally comprises a shaker 19. A shaker is a device installed in a seat to cause vibrations. This shaker may be activated by processing unit 12 in particular in dangerous situations, for example the already mentioned abrupt braking of a vehicle in front of the equipped vehicle, to additionally get the driver's attention. Shaker 19 is merely an example for additional means besides the audio message output via loudspeakers 18 to convey information to an occupant of the vehicle, and besides shaker 19 other tactile means or visual displays may be additionally provided in embodiments of the present invention. However, a visual display is not necessary, and an embodiment of the invention may convey information to a driver without using visual displays.

The shaker or similar means may also be used in other dangerous situations, for example a motorist driving against the traffic on a highway, an approaching emergency vehicle and the like.

In the embodiment of Fig. 1, processing unit 12 further comprises a user interface symbolized by arrow 20. With the user interface, a user, for example a driver of the equipped vehicle, can adjust the system as desired. For example, audio messages for specific driving-relevant information may be chosen. For instance, the user may choose whether a parking assistance system uses "beep"-signals or spoken text. Furthermore, regarding driving-relevant information relating to potential dangers, a user may select a threshold value at which the system is activated. Such a threshold value may for example be a value of a distance to another vehicle representing a potential danger, a relative velocity of such a further vehicle or other obstacles and the like. Furthermore, the user may activate or deactivate certain features of the system like the announcement of traffic information, collision warnings, parking assist and the like.

It should be noted that the above-discussed embodiments merely serve as examples of the present invention, and many variations are possible. For example, while the embodiments have been described as being able to deal with a plurality of different driving-relevant information like approaching emergency vehicles, obstacles, potentially dangerous other vehicles, traffic information and the like, other embodiments may be limited to only some or only one of these types of information. Furthermore, regarding the embodiment of Fig. 1, while distinct elements are shown having distinct functions, elements may also be combined. For example, filter 21 may be integrated in convolution engine 14 and/or integrated with processing unit 12 or audio selector 13. On the other hand, while a single memory 15 is shown for storing audio messages and room impulse responses, also separate memories may be provided.

Furthermore, while the generation of audio signals with spatial characteristics using room impulse responses has been described in detail, other techniques known in the art may also be used for generating such audio signals.

As already mentioned, audio system 17 and loudspeakers 18 may be an integral part of embodiments of the present invention, but, also in other embodiments, only an interface to such systems may be provided. The same holds true for sensor 10 and/or navigation system 11. In other words, embodiments of the present invention may not have integrated sensors, but provide an interface to one or more existing sensors in the vehicle.

With reference to Fig. 3, a spatial resolution in two dimensions has been discussed. In other embodiments, the direction of the spatial characteristic may be three-dimensional, such that audio messages may also be output via loudspeakers such that the occupant of the equipped vehicle has the impression that the sound source is above or below the vehicle.

## Claims

1. A method for conveying information to an occupant of a motor vehicle, comprising:
obtaining driving-relevant information,
determining an audio message depending on said driving-relevant information,
determining a spatial characteristic for said audio message depending on said driving-relevant information, and
outputting said audio message with said spatial characteristic in said motor vehicle,
wherein said spatial characteristic corresponds to a position of a relevant element of said driving-relevant information,
**characterized in that**
said relevant element is stationary, and
said spatial characteristic comprises a movement to decrease the likelihood of front-back confusion.

2. The method according to claim 1,
wherein said driving-relevant information comprises at least one message chosen from the group consisting of traffic information, information regarding dangerous driving situations, information regarding other vehicles, information regarding emergency vehicles and information regarding obstacles.

3. The method according to claim 1 or 2,
wherein said audio message comprises at least one message chosen from the group consisting of spoken text, signals, music, traffic sounds and siren sounds.

4. The method according to any one of the preceding claims,
wherein said spatial characteristic comprises at least one element from the group consisting of a distance, a direction and a movement.

5. The method according to any of the preceding claims,
wherein said relevant element is chosen from the group consisting of a vehicle, an obstacle, a traffic jam and an accident.

6. The method according to any one of the preceding claims,
wherein said outputting step comprises:
selecting at least one stored room impulse response depending on said spatial characteristic, and
convolving said room impulse response with said audio message.

7. The method according to claim 6,
wherein said at least one room impulse response is selected from a plurality of stored room impulse responses for a plurality of positions relative to the position of said occupant,
wherein a density of said positions is higher closer to the occupant than farther away from the occupant.

8. The method according to claim 6 or 7,
wherein said spatial characteristic comprises a movement,
wherein said at least one room impulse response comprises a series of room impulse responses approximating a series of locations of said movement,
wherein said convolving step comprises sequentially convolving said series of room impulse responses with said audio message.

9. The method according to claim 8, further comprising:
fading between adjacent room impulse responses of said series of room impulse responses.

10. The method according to any one of the preceding claims,
wherein said outputting step comprises:
performing a crosstalk cancellation.

11. The method according to any one of the preceding claims, further comprising:
outputting a non-audio message in addition to said audio message depending on said driving-relevant information.

12. The method according to claim 11,
wherein said non-audio message comprises a message chosen from the group consisting of a tactile message and a visual message.

13. An apparatus for conveying information to an occupant of a motor vehicle, comprising:
obtaining means (10, 11, 12) for obtaining driving-relevant information,
determining means (12, 13, 14, 15, 21) for determining an audio message depending on said driving-relevant information and for determining a spatial characteristic for said audio message depending on said driving-relevant information, and
outputting means (16, 17, 18) for outputting said audio message with said spatial characteristic in said motor vehicle,
wherein said spatial characteristic corresponds to a position of a relevant element of said driving-relevant information,
**characterized in that**
said determining means is configured such that when said relevant element is stationary, said spatial characteristic comprises a movement to decrease the likelihood of front-back confusion.

14. The apparatus according to claim 13,
wherein said obtaining means comprise at least one element taken from the group consisting of a sensor, a navigation system and an interface.

15. The apparatus according to claim 13 or 14,
wherein said determining means comprise a convolution engine (14) and a memory (15) coupled with said convolution engine (14),
wherein a plurality of room impulse responses is stored in said memory (15).

16. The apparatus according to any one of claims 13-15,
wherein said outputting means comprise at least one pair of loudspeakers (18).

17. The apparatus according to claim 16,
wherein said at least one pair of loudspeakers (18) comprises a plurality of pairs of loudspeakers (18).

18. The apparatus according to any one of claims 13-17_{,}
wherein said outputting means comprises an interface for interfacing with an audio system of said motor vehicle.

19. The apparatus according to any one of claims 13-18,
wherein said outputting means comprise a crosstalk-canceller coupled to said determining means to receive a signal from said determining means.

20. The apparatus according to any one of claims 13-19, further comprising a shaker (19) installed in a seat of said motor vehicle, said shaker (19) being activated depending on said driving-relevant information.

21. The apparatus according to any one of claims 13-20,
wherein said apparatus is adapted to perform the method according to any one of claims 1-12.

22. A motor vehicle, comprising an apparatus according to any one of claims 13-21.

## Patentansprüche

1. Verfahren zum Übermitteln einer Information an einen Insassen eines Motorfahrzeugs, umfassend:
Beschaffen einer fahrrelevanten Information,
Bestimmen einer Audionachricht in Abhängigkeit von der fahrrelevanten Information,
Bestimmen einer räumlichen Eigenschaft für die Audionachricht in Abhängigkeit der fahrrelevanten Information, und
Ausgeben der Audionachricht mit der räumlichen Eigenschaft in dem Motorfahrzeug,
wobei die räumliche Eigenschaft einer Position eines relevanten Elements der fahrrelevanten Information entspricht,
**dadurch gekennzeichnet, dass**
das relevante Element stationär ist, und
die räumliche Eigenschaft eine Bewegung umfasst, um die Wahrscheinlichkeit einer Vorderseiten-Rückseiten-Verwirrung zu verringern.

2. Verfahren nach Anspruch 1,
wobei die fahrrelevante Information mindestens eine Nachricht ausgewählt aus der Gruppe bestehend aus einer Verkehrsinformation, einer Information bezüglich gefährlicher Fahrsituationen, einer Information bezüglich anderer Fahrzeuge, einer Information bezüglich Einsatzfahrzeugen und einer Information bezüglich Hindernissen umfasst.

3. Verfahren nach Anspruch 1 oder 2,
wobei die Audionachricht mindestens eine Nachricht ausgewählt aus der Gruppe bestehend aus gesprochenem Text, Signalen, Musik, Verkehrsgeräuschen und Sirenengeräuschen umfasst.

4. Verfahren nach einem der vorhergehenden Ansprüche,
wobei die räumliche Eigenschaft mindestens ein Element aus der Gruppe bestehend aus einer Entfernung, einer Richtung und einer Bewegung umfasst.

5. Verfahren nach einem der vorhergehenden Ansprüche,
wobei das relevante Element aus der Gruppe bestehend aus einem Fahrzeug, einem Hindernis, einem Verkehrsstau und einem Unfall ausgewählt wird.

6. Verfahren nach einem der vorhergehenden Ansprüche,
wobei der Ausgabeschritt umfasst:
Auswählen von mindestens einer gespeicherten Raumimpulsantwort in Abhängigkeit von der räumlichen Eigenschaft, und
Falten der Raumimpulsantwort mit der Audionachricht.

7. Verfahren nach Anspruch 6,
wobei die mindestens eine Raumimpulsantwort aus mehreren gespeicherten Raumimpulsantworten für mehrere Positionen bezogen auf die Position des Insassen ausgewählt wird,
wobei eine Dichte der Positionen näher bei dem Insassen höher als weiter weg von dem Insassen ist.

8. Verfahren nach Anspruch 6 oder 7,
wobei die räumliche Eigenschaft eine Bewegung umfasst,
wobei die mindestens eine Raumimpulsantwort eine Reihe von Raumimpulsantworten umfasst, welche eine Reihe von Orten der Bewegung annähert,
wobei der Faltungsschritt ein fortlaufendes Falten der Reihe von Raumimpulsantworten mit der Audionachricht umfasst.

9. Verfahren nach Anspruch 8, ferner umfassend:
Überblenden zwischen benachbarten Raumimpulsantworten der Reihe von Raumimpulsantworten.

10. Verfahren nach einem der vorhergehenden Ansprüche, wobei der Ausgabeschritt umfasst:
Ausführen einer Übersprechkompensation.

11. Verfahren nach einem der vorhergehenden Ansprüche, ferner umfassend:
Ausgeben einer Nicht-Audionachricht zusätzlich zu der Audionachricht in Abhängigkeit von der fahrrelevanten Information.

12. Verfahren nach Anspruch 11,
wobei die Nicht-Audionachricht eine Nachricht ausgewählt aus der Gruppe bestehend aus einer taktilen Nachricht und einer optischen Nachricht umfasst.

13. Vorrichtung zum Übermitteln einer Information zu einem Insassen eines Motorfahrzeugs, umfassend:
Beschaffungsmittel (10, 11, 12) zum Beschaffen einer fahrrelevanten Information,
Bestimmungsmittel (12, 13, 14, 15, 21) zum Bestimmen einer Audionachricht in Abhängigkeit von der fahrrelevanten Information und zum Bestimmen einer räumlichen Eigenschaft für die Audionachricht in Abhängigkeit von der fahrrelevanten Information, und
Ausgabemittel (16, 17, 18) zum Ausgeben der Audionachricht mit der räumlichen Eigenschaft in dem Motorfahrzeug,
wobei die räumliche Eigenschaft einer Position eines relevanten Elements der fahrrelevanten Information entspricht,
**dadurch gekennzeichnet, dass**
das Bestimmungsmittel derart ausgestaltet ist, dass, wenn das relevante Element stationär ist, die räumliche Eigenschaft eine Bewegung umfasst, um die Wahrscheinlichkeit einer Vorderseiten-Rückseiten-Verwirrung zu verringern.

14. Vorrichtung nach Anspruch 13,
wobei das Beschaffungsmittel mindestens ein Element entnommen aus der Gruppe bestehend aus einem Sensor, einem Navigationssystem und einer Schnittstelle umfasst.

15. Vorrichtung nach Anspruch 13 oder 14,
wobei die Bestimmungsmittel eine Faltungsmaschine (14) und einen Speicher (15), welcher mit der Faltungsmaschine (14) gekoppelt ist, umfassen,
wobei mehrere Raumimpulsantworten in dem Speicher (15) gespeichert sind.

16. Vorrichtung nach einem der Ansprüche 13 bis 15,
wobei die Ausgabemittel mindestens ein Paar von Lautsprechern (18) umfassen.

17. Vorrichtung nach Anspruch 16, wobei das mindestens eine Paar von Lautsprechern (18) mehrere Paare von Lautsprechern (18) umfasst.

18. Vorrichtung nach einem der Ansprüche 13 bis 17,
wobei das Ausgabemittel eine Schnittstelle zum Koppeln mit einem Audiosystem des Motorfahrzeugs umfasst.

19. Vorrichtung nach einem der Ansprüche 13 bis 18,
wobei die Ausgabemittel einen Übersprechkompensator umfassen, welcher mit dem Bestimmungsmittel gekoppelt ist, um ein Signal von dem Bestimmungsmittel zu empfangen.

20. Vorrichtung nach einem der Ansprüche 13 bis 19, ferner umfassend eine Schüttelvorrichtung (19), welche in einem Sitz des Motorfahrzeugs installiert ist, wobei die Schüttelvorrichtung (19) in Abhängigkeit von der fahrrelevanten Information aktiviert wird.

21. Vorrichtung nach einem der Ansprüche 13 bis 20,
wobei die Vorrichtung ausgestaltet ist, das Verfahren nach einem der Ansprüche 1 bis 12 auszuführen.

22. Motorfahrzeug, umfassend eine Vorrichtung nach einem der Ansprüche 13 bis 21.

## Revendications

1. Procédé pour transférer une information vers un occupant d'un véhicule automobile, comprenant:
l'obtention d'une information pertinente à la conduite,
la détermination d'un message audio en fonction de ladite information pertinente à la conduite,
la détermination d'une caractéristique spatiale pour ledit message audio en fonction de ladite information pertinente à la conduite, et
l'émission dudit message audio avec ladite caractéristique spatiale dans ledit véhicule automobile,
dans lequel ladite caractéristique spatiale correspond à une position d'un élément pertinent de ladite information pertinente à la conduite,
**caractérisé en ce que**
ledit élément pertinent est stationnaire, et
ladite caractéristique spatiale comprend un mouvement pour réduire la probabilité d'une confusion avant-arrière.

2. Procédé selon la revendication 1,
dans lequel ladite information pertinente à la conduite comprend au moins un message choisi du groupe constitué des informations routières, des informations concernant des conditions de conduite dangereuses, des informations concernant d'autres véhicules, des informations concernant des véhicules de secours et des informations concernant des obstacles.

3. Procédé selon la revendication 1 ou 2,
dans lequel ledit message audio comprend au moins un message choisi du groupe constitué de texte prononcé, de signaux, de musique, de bruits de circulation et de bruits de sirène.

4. Procédé selon l'une quelconque des revendications précédentes,
dans lequel ladite caractéristique spatiale comprend au moins un élément du groupe constitué d'une distance, d'une direction et d'un mouvement.

5. Procédé selon l'une quelconque des revendications précédentes,
dans lequel ledit élément pertinent est choisi du groupe constitué d'un véhicule, d'un obstacle, d'un embouteillage et d'un accident.

6. Procédé selon l'une quelconque des revendications précédentes,
dans lequel ladite étape d'émission comprend:
la sélection d'au moins une réponse impulsionnelle spatiale mémorisée en fonction de ladite caractéristique spatiale, et
la convolution de ladite réponse impulsionnelle avec ledit message audio.

7. Procédé selon la revendication 6,
dans lequel ladite au moins une réponse impulsionnelle spatiale est sélectionnée d'une pluralité de réponses impulsionnelles spatiales mémorisées pour une pluralité de positions relatives à la position dudit occupant,
dans lequel une densité desdits positions est plus élevée plus proche de l'occupant que plus loin de l'occupant.

8. Procédé selon la revendication 6 ou 7,
dans lequel ladite caractéristique spatiale comprend un mouvement,
dans lequel ladite au moins une réponse impulsionnelle spatiale comprend une série de réponses impulsionnelles spatiales approximant une série d'emplacements dudit mouvement,
dans lequel ladite étape de convolution comprend la convolution séquentielle de ladite série de réponses impulsionnelles spatiales avec ledit message audio.

9. Procédé selon la revendication 8, comprenant en outre:
l'évanouissement entre des réponses impulsionnelles spatiales adjacentes de ladite série de réponses impulsionnelles spatiales.

10. Procédé selon l'une quelconque des revendications précédentes,
dans lequel ladite étape d'émission comprend:
l'exécution d'une annulation de diaphonie.

11. Procédé selon l'une quelconque des revendications précédentes, comprenant en outre:
l'émission d'un message non-audio en plus dudit message audio en fonction de ladite information pertinente à la conduite.

12. Procédé selon la revendication 11,
dans lequel ledit message non-audio comprend un message choisi du groupe constitué d'un message tactile et d'un message visuel.

13. Dispositif pour transférer une information vers un occupant d'un véhicule automobile, comprenant:
des moyens d'obtention (10, 11, 12) pour obtenir une information pertinente à la conduite,
des moyens de détermination (12, 13, 14, 15, 21) pour déterminer un message audio en fonction de ladite information pertinente à la conduite et pour déterminer une caractéristique spatiale pour ledit message audio en fonction de ladite information pertinente à la conduite, et
des moyens d'émission (16, 17, 18) pour émettre ledit message audio avec ladite caractéristique spatiale dans ledit véhicule automobile,
dans lequel ladite caractéristique spatiale correspond à une position d'un élément pertinent de ladite information pertinente à la conduite,
**caractérisé en ce que**
ledit moyen de détermination est configuré de telle manière que, lorsque ledit élément pertinent est stationnaire, ladite caractéristique spatiale comprend un mouvement pour diminuer la probabilité d'une confusion avant-arrière.

14. Dispositif selon la revendication 13,
dans lequel ledit moyen d'obtention comprend au moins un élément pris dans le groupe constitué d'un capteur, d'un système de navigation et d'une interface.

15. Dispositif selon la revendication 13 ou 14,
dans lequel ledit moyen de détermination comprend un moteur de convolution (14) et une mémoire (15) couplée audit moteur de convolution (14),
dans lequel une pluralité de réponses impulsionnelles spatiales est stockée dans ladite mémoire (15).

16. Dispositif selon l'une quelconque des revendications 13-15,
dans lequel ledit moyen d'émission comprend au moins une paire de haut-parleurs (18).

17. Dispositif selon la revendication 16,
dans lequel ladite au moins une paire de haut-parleurs (18) comprend une pluralité de paires de hautparleurs (18).

18. Dispositif selon l'une quelconque des revendications 13-17,
dans lequel ledit moyen d'émission comprend une interface pour interfacer avec un système audio dudit véhicule automobile.

19. Dispositif selon l'une quelconque des revendications 13-18,
dans lequel ledit moyen d'émission comprend un annulateur de diaphonie couplé audit moyen de détermination pour recevoir un signal dudit moyen de détermination.

20. Dispositif selon l'une quelconque des revendications 13-19, comprenant en outre un vibreur (19) installé dans un siège dudit véhicule automobile, ledit vibreur (19) étant activé en fonction de ladite information pertinente à la conduite.

21. Dispositif selon l'une quelconque des revendications 13-20,
dans lequel ledit dispositif est adapté pour exécuter le procédé selon l'une quelconque des revendications 1-12.

22. Véhicule automobile comprenant un dispositif selon l'une quelconque des revendications 13-21.
